# EUROPEAN PATENT SPECIFICATION

(11) **EP 3 575 596 B1**
(45) Date of publication and mention of the grant of the patent: **27.10.2021**
(21) Application number: 18175215.5
(22) Date of filing: 30.05.2018
(51) Int. Cl.: F03D 17/00

(54) **SURVEILLANCE OF DELAMINATION PROPAGATION IN A COMPOSITE STRUCTURE IN A WIND TURBINE COMPONENT**
ÜBERWACHUNG DES DELAMINATIONSFORTSCHRITTS IN EINER VERBUNDSTOFFSTRUKTUR IN EINER WINDTURBINENKOMPONENTE
SURVEILLANCE DE LA PROPAGATION DE DÉLAMINAGE DANS UNE STRUCTURE COMPOSITE D'UN COMPOSANT D'ÉOLIENNE

(43) Date of publication of application: 04.12.2019
(73) Proprietor: Siemens Gamesa Renewable Energy A/S, 7330 Brande (DK)
(72) Inventor: Nielsen, Per, 9310 Vodskov (DK)
(74) Representative: Aspacher, Karl-Georg

(56) References cited:
- EP-A1- 2 891 792
- EP-A1- 2 896 961
- EP-A1- 2 933 480
- CN-A- 107 271 545

## Description

The present invention relates generally to wind turbines, and in particular, to a composite structure of a wind turbine rotor blade. More specifically, the present invention relates to techniques for surveillance of delamination propagation in a composite structure in a wind turbine component.

Dimensions of wind turbines and wind blades are ever increasing, and consequently are increasing the challenges to overcome risks of components failures in wind turbines. Presently, preferred materials used to manufacture wind turbine rotor blade components, hereinafter also referred to as the blade components such as shell, shear web, spar caps etc., are glass- and/or carbon-fiber reinforced plastics commonly referred to as "composites", which are generally processed through hand lay-up and resin injection molding processes. Larger sections, longer spans, thicker structural components of the blades make the resin flow very complex to design and optimize, and thus posing an increased risk of manufacturing errors such as transverse wrinkles, poor impregnation of the resin, air pockets, large areas with dry fibers, and so on and so forth consequently resulting in delamination. Furthermore, even if properly manufactured, repeated cyclic stresses, impact, and so on can cause layers of the composite to separate i.e. to delaminate which results in significant loss of mechanical strength of the composite.

Presently, mechanical fasteners such as bolts are used to prevent onset of delamination especially where such an onset is foreseeable or to cease progress of delamination and counter its effect on the composite where delamination has already begun. The bolts are placed through holes drilled into the composite, generally normally to the expanse of the layers of the composite. The bolts then hold the layers of the composite together and reinforce or bolster the composite, thereby providing mechanical strength to the composite and countering the effect of delamination. However, repeated cyclical stresses and the heavy loads which the bolts have to endure resulting from operation of the wind turbine consequently lead in failure of the bolts, i.e. the bolts eventually snap after some usage for example after a few thousand cycles. If the wind turbine is still operated after such bolts have snapped the delamination progresses further and may result in catastrophic failures of the composite structure and may even be dangerous to surroundings posing a fear of the blade falling off the hub onto the ground and/or surroundings. Thus surveillance of propagation of delamination in such composite structures in the wind turbine components such as blades is of utmost importance.

Document CN107271545 discloses an electric eddy current sensor for monitoring a carbon fiber composite material layered joint structure.

The object of the present invention is to provide a technique for surveillance of propagation of delamination in such composite structures in wind turbine components.

The abovementioned object is achieved by an arrangement for surveillance of delamination propagation in a composite structure in a wind turbine component according to claim 1 of the present technique, by arrangement for surveillance of delamination propagation in a composite structure in a wind turbine component according to claim 8, and by a method for surveillance of delamination propagation in a composite structure in a wind turbine component according to claim 15 of the present technique. Advantageous embodiments of the present technique are provided in dependent claims.

In a first aspect of the present technique an arrangement for surveillance of delamination propagation in a composite structure in a wind turbine component is provided. The arrangement includes at least one mechanical fastener, a current source and a current measurement device. The mechanical fastener is longitudinally positioned through layers of the composite structure. The mechanical fastener, for example a bolt, reinforces the composite structure. The mechanical fastener is made of an electrically conductive material, for example stainless steel. The current source is electrically connected to a first end of the mechanical fastener on a first side of the composite structure and provides an electrical current to the mechanical fastener through the first end of the mechanical fastener. The current measurement device is electrically connected to a second end of the mechanical fastener on a second side of the composite structure and determines the electrical current exiting the mechanical fastener through the second end of the mechanical fastener. When the delamination propagates through the composite structure or when the load on the composite structure is high enough for delamination to propagate through the composite structure even in the presence of the mechanical fastener, the mechanical fastener fails i.e. snaps thus breaking the electrical circuit formed by the current source, the mechanical fastener and the current measurement device, thus resulting into cessation of flow of electric current to the current measurement device, which consequently is indicative of propagation of delamination in the composite structure.

In an embodiment of the arrangement, the layers of composite structure through which the mechanical fastener is longitudinally positioned are layers of a shell of the wind turbine blade, for example a trailing edge region of the wind turbine blade, or a root section of the wind turbine blade.

In another embodiment of the arrangement, the layers of composite structure through which the mechanical fastener is longitudinally positioned are layers of a shear web of the wind turbine blade.

In yet another embodiment of the arrangement, the layers of composite structure through which the mechanical fastener is longitudinally positioned are layers of a spar cap of the wind turbine blade.

In a second aspect of the present technique an arrangement for surveillance of delamination propagation in a composite structure in a wind turbine component is provided. The arrangement includes a plurality of mechanical fasteners, a current source and a current measurement device. Each of the mechanical fasters is longitudinally positioned through layers of the composite structure to reinforce the composite structure. The mechanical fasteners, for example bolts, are made of an electrically conductive material, for example stainless steel. The mechanical fasteners are electrically connected to each other in series. Thus, the series comprises a first mechanical fastener and a last mechanical fastener. The current source is electrically connected on a first side of the composite structure to a first end of the first mechanical fastener and provides an electrical current to the first mechanical fastener through the first end of the first mechanical fastener. Since the mechanical fasteners are electrically connected to each other in series, the electrical current so provided to the first mechanical fastener flows to the last mechanical fastener, through one or more, if any, intermediately positioned mechanical fasteners of the series. The current measurement device is electrically connected to an end of the last mechanical fastener such that electrical current flowing from the first mechanical fastener to the last mechanical fastener flows through the last mechanical fastener and exits the last mechanical fastener and flows to the current measuring device which determines the electrical current exiting the last mechanical fastener. When the delamination propagates through the composite structure or when the load on the composite structure is high enough for delamination to propagate through the composite structure even in the presence of the mechanical fasteners, one or more of the mechanical fastener fail, i.e. snap or break, thus breaking the electrical circuit formed by the current source, the serially arranged mechanical fasteners and the current measurement device, thus resulting into cessation of flow of electric current to the current measurement device, which consequently is indicative of propagation of delamination in the composite structure.

In an embodiment of the arrangement, the layers of composite structure through which the mechanical fasteners are longitudinally positioned are layers of a shell of the wind turbine blade, for example a trailing edge region of the wind turbine blade, or a root section of the wind turbine blade.

In another embodiment of the arrangement, the layers of composite structure through which the mechanical fasteners are longitudinally positioned are layers of a shear web of the wind turbine blade.

In yet another embodiment of the arrangement, the layers of composite structure through which the mechanical fasteners are longitudinally positioned are layers of a spar cap of the wind turbine blade.

In a third aspect of the present technique a method for surveillance of delamination propagation in a composite structure in a wind turbine component is presented. In the method, an arrangement according to the aforementioned first aspect or according to the aforementioned second aspect is provided. Thereafter, the current source of the arrangement is activated to provide flow of electrical current in the arrangement so provided. Finally in the method, the electrical current measured by the current measurement device of the arrangement is determined. If the delamination has not progressed i.e. if the structural integrity of the composite structure is still acceptable for operation of the wind turbine, the mechanical fastener or fasteners in the composite structure are intact and thus the electrical circuit formed by the current source, the one or more of the mechanical fasteners and the current measurement device is intact and a current flows from the current source into the current measurement device via the mechanical fastener or fasteners which is measured therein and is indicative of existence of intact structural integrity of the composite structure. However, when the delamination propagates through the composite structure or when the load on the composite structure is high enough for delamination to propagate through the composite structure even in the presence of the mechanical fastener or fasteners, the mechanical fastener or one or more of the mechanical fasteners fail i.e. snap or break and thus breaking the electrical circuit formed by the current source, the mechanical fastener or fasteners and the current measurement device, consequently resulting into cessation of flow of electric current to the current measurement device, which thereby is indicative of propagation of delamination in the composite structure.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: schematically depicts a wind turbine having a wind turbine rotor blade in which arrangements of the present technique may be incorporated;
- FIG 2: schematically depicts the wind turbine rotor blade in which arrangements of the present technique may be incorporated;
- FIG 3: schematically depicts a cross-sectional view of an airfoil of the wind turbine rotor blade in which arrangements of the present technique may be incorporated;
- FIG 4: schematically depicts an exemplary embodiment of an arrangement, in a composite structure, according to the first aspect of the present technique;
- FIG 5: schematically depicts a state of the arrangement of FIG 4 indicating progress of delamination in the composite structure;
- FIG 6: schematically depicts an exemplary embodiment of an arrangement, in the composite structure, according to the second aspect of the present technique;
- FIG 7: schematically depicts another exemplary embodiment of the arrangement, in the composite structure, according to the second aspect of the present technique; and
- FIG 8: schematically depicts a root section of the wind turbine rotor blade of FIG 2 and an exemplary orientation of the arrangement according to the second aspect of the present technique in the root section.

Hereinafter, above-mentioned and other features of the present technique are described in details. Various embodiments are described with reference to the drawing, wherein like reference numerals are used to refer to like elements throughout. In the following description, for the purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", "third" etc. are used herein only to facilitate discussion, and carry no particular temporal or chronological significance unless otherwise indicated.

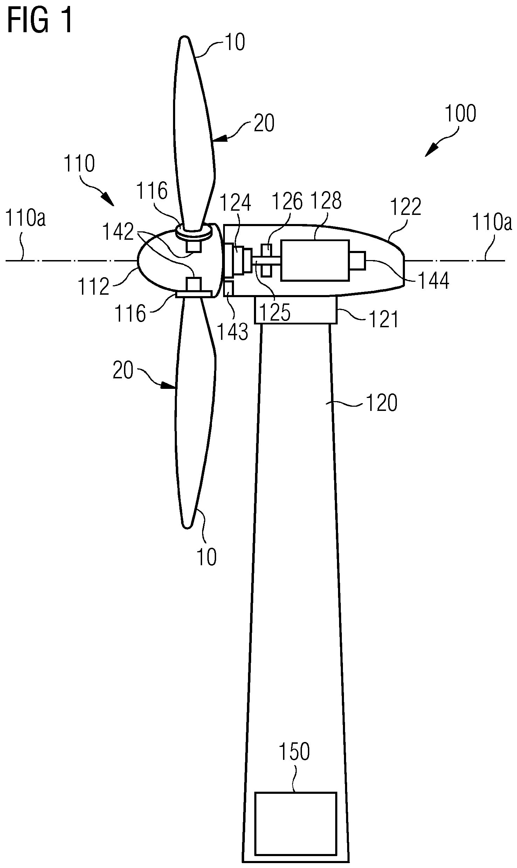

FIG 1 shows an exemplary embodiment of a wind turbine 100 of the present technique. The wind turbine 100 includes a tower 120, which is mounted on a fundament (not shown). A nacelle 122 is mounted on top of the tower 120 and rotatable with regard to the tower 120 by means of a yaw angle adjustment mechanism 121 such as yaw bearings and yaw motors. The yaw angle adjustment mechanism 121 functions to rotate the nacelle 122 around a vertical axis (not shown) referred to as a yaw axis, which is aligned with the longitudinal extension of the tower 120. The yaw angle adjustment mechanism 121 rotates the nacelle 122 during operation of the wind turbine 100 to ensure that the nacelle 122 is appropriately aligned with the current wind direction to which the wind turbine 100 is subjected.

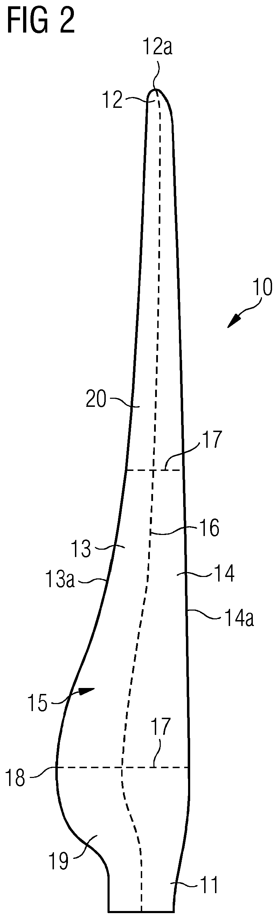

The wind turbine 100 further includes a rotor 110 having at least a rotor blade 10, and generally three rotor blades 10, although in the perspective view of FIG 1 only two rotor blades 10 are visible. One of the rotor blades 10 is schematically depicted in FIG 2. The rotor 110 is rotatable around a rotational axis 110a. The rotor blades 10, hereinafter also referred to as the blades 10 or as the blade 10 when referring to one of the blades 10, are generally mounted at a driving collar 112, also referred to as a hub 112. The hub 112 is mounted rotatable with regard to the nacelle 122 by means of a main bearing (not shown). The hub 112 is rotatable about the rotational axis 110a. Each of the blades 10 extends radially with respect to the rotational axis 110a and has an airfoil section 20.

In between the hub 112 and each of the rotor blades 10, is provided a blade adjustment mechanism 116 in order to adjust the blade pitch angle of the blade 10 by rotating the respective blade 10 about a longitudinal axis (not shown) of the blade 10. The longitudinal axis of each of the blade 10 is aligned substantially parallel with the longitudinal extension of the respective blade 10. The blade adjustment mechanism 116 functions to adjust blade pitch angles of the respective blade 10.

The wind turbine 100 includes a main shaft 125 that rotatably couples the rotor 110, particularly the hub 112, to a generator 128 housed within the nacelle 122. The hub 112 is connected to a rotor of the generator 128. In an exemplary embodiment (not shown) of the wind turbine 100, the hub 112 is connected directly to the rotor of the generator 128, thus the wind turbine 100 is referred to as a gearless, direct drive wind turbine 100. As an alternative, as shown in the exemplary embodiment of FIG 1, the wind turbine 100 includes a gear box 124 provided within the nacelle 122 and the main shaft 125 connects the hub 112 to the generator 128 via the gear box 124, thereby the wind turbine 100 is referred to as a geared wind turbine 100. The gear box 124 is used to convert the number of revolutions of the rotor 110 into a higher number of revolutions of the main shaft 125, and consequently of the rotor of the generator 128. Furthermore, a brake 126 is provided in order to stop the operation of the wind turbine 100 or to reduce the rotational speed of the rotor 110 for instance in case of a very strong wind and/or in case of an emergency.

The wind turbine 100 further includes a control system 150 for operating the wind turbine 100 at desired operational parameters, for example at a desired yaw angle, with a desired blade pitch, at a desired rotational speed of the rotor 110, and so on and so forth. The controlling and/or adjusting of the operational parameters are performed to obtain an optimized power generation under the existent conditions for example under existent wind conditions and other weather conditions.

The wind turbine 100 may further include different sensors for example a rotational speed sensor 143, a power sensor 144, angle sensors 142, etc that provide inputs to the control mechanism 150 or other components of the wind turbine 100 to optimize operation of the wind turbine 100.

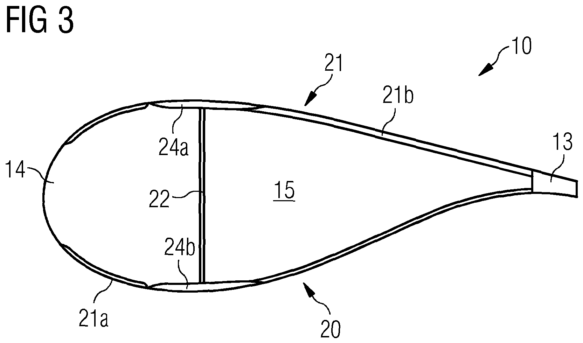

Furthermore as shown in FIG 2, the rotor blade 10 includes a root section 11 and an airfoil section 20. Generally, the rotor blade 10 includes a transition section 90 in between the root section 11 and the airfoil section 20. The airfoil section 20, hereinafter also referred to as the airfoil 20, includes a tip section 12 having a tip 12a. From the root section 11 to the tip 12a runs a span 16, of the rotor blade 10, which follows the shape of the rotor blade 10. As shown in FIGs 2 and 3, the rotor blade 10 includes a leading edge section 14 having the leading edge 14a, and a trailing edge section 13 having the trailing edge 13a. The trailing edge section 13 surrounds the trailing edge 13a. Similarly, the leading edge section 14 surrounds the leading edge 14a. The geometry, i.e. the shape, of the rotor blade 10 is defined by a shell 21, also referred to as the blade shell 21, of the rotor blade 10. In order to guarantee a sufficient strength and stability, there is provided a web 22 or a shear web 22 which extends between a suction side portion and a pressure side portion of the blade shell 21. The web 22 typically extends over most of the length of the rotor blade 10, i.e. from the root section 11 to the tip section 12 of the rotor blade 10. At these portions of the blade shell 21 where the web 22 meets the blade shell 21, the blade shell 21 is reinforced by one or more spar caps 24a, 24b. The spar caps 24a, 24b may have the so-called 'structural shell design' i.e. where the spar caps 24a, 24b are integrated or embedded within the structure of the shell 21, i.e. the outer shell 21. The blade shell 21 is generally a composite structure. The blade shell 21 may be formed in one-part as is done by Siemens in its well-known Integral Blade manufacturing process or alternatively a windward part and a leeward part each of which are half shells are formed and then these half shells are joined together to form the blade shell 21. As an example FIG 3 depicts parts 21a, 21b which represent parts of the blade shell 21 having composite structures. Besides the blade shell 21 or parts 21a, 21b of the blade shell 21 or the root section 11 of the blade 10, the shear web 22 and the spar caps 24a, 24b represent other examples of wind turbine components having composite structures i.e. typically configured as a laminate comprising a fiber-reinforced plastic material or fabrics and core materials e.g. balsa wood, ply-wood, foam, etc.

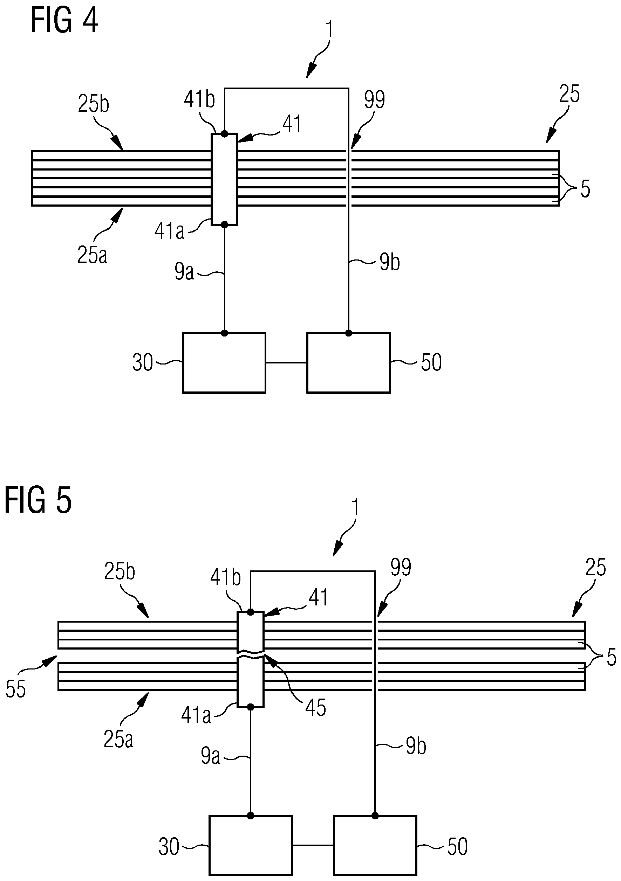

Hereinafter FIGs 4 and 5 are referred to explain an exemplary embodiment of an arrangement 1 for surveillance of delamination propagation in the composite structure 25 in the wind turbine component according to the first aspect of the present technique whereas FIGs 5 to 8 are referred to explain an exemplary embodiment of an arrangement 1a for surveillance of delamination propagation in the composite structure 25 in the wind turbine component according to the second aspect of the present technique.

The arrangement 1, 1a is used to surveil delamination propagation in the composite structure 25 in the wind turbine component, i.e. to determine onset of delamination and/or to determine progression or advance or spread of delamination in the composite structure 25 of the wind turbine component. Such wind turbine component comprising the composite structure 25 may be, but not limited to, the shell 21 of the blade 10, the web 22, the root section 11 or the one or more spar caps 24a, 24b as explained hereinabove in reference to FIGs 1 to 3.

The basic concept of the invention is to use one or more mechanical fasteners formed of electrically conductive material to reinforce a composite structure in a wind turbine component e.g. the shell 21, the web 22 or the spar cap 24a, 24b, or the root section 11 of the wind turbine blade 10. The fasteners are electrically connected in series when multiple fasteners are used. The technique includes a current source that provides electrical current to the one or more fasteners and a current measurement device that determines the electrical current exiting the one or more fasteners. The current source, the one or more fasteners and the current measurement device together form an electrical circuit through which current flows as long as none of the one or more fasteners snap. However, onset or progression of delamination in the fasteners reinforced composite material results into snapping of one or more of the reinforcing fasteners resulting into breakage of the electrical circuit and cessation of current flow to the current measurement device.

FIG 4 schematically depicts an exemplary embodiment of the arrangement 1 in the composite structure 25, and FIG 5 schematically depicts a state of the arrangement 1 of FIG 4 indicating progress of delamination in the composite structure 25. The arrangement 1 includes at least one mechanical fastener 41, a current source 30 and a current measurement device 50.

The mechanical fastener 41 may be, but not limited to, a bolt i.e. a mating bolt with a corresponding threaded nut. Another example of the mechanical fastener 41 may be a rivet. As shown in FIG 4 the mechanical fastener 41, hereinafter also referred to as the fastener 41, is longitudinally positioned through layers 5 of the composite structure 25. The mechanical fastener 41 reinforces the composite structure 25 or in other words helps holding together of the layers 5 in addition to the bonding material such as a resin that may be present between the layers 5 to bond the layers 5 together. The fastener 41 is applied to the stack of layers 5 forming the composite structure 25, hereinafter also referred to as the structure 25, either to provide additional support for preventing delamination of the layers 5 in otherwise resin bonded layers 5, or for correcting or repairing an existing instance of delamination and subsequently maintaining in corrected or repaired state the structure 25. Generally mechanical fastener 41 having about 8mm to about 16 mm diameter is used.

The mechanical fastener 41 is made of an electrically conductive material, for example stainless steel. Preferable hightensile strength stainless steel bolts are used. Thus an electrical current introduced into one end of the fastener 41 for example into a first end 41a of the fastener 41 flows through the body of the fastener 41 along the direction of the longitudinal axis of the fastener 41 and exits at the other end of the fastener 41 i.e. a second end 41b of the fastener 41. The ends 41a, 41b of the fastener 41 may be protruding outside the structure 25, such as shown in FIG 4 which depicts the first end 41a protruding out of the structure 25 at a first side or face 25a of the structure 25 and the second end 41b protruding out of the structure 25 at a second side or face 25b of the structure 25. Alternatively, the ends 41a, 41b of the fastener 41 may be flush with the surfaces of the sides 25a, 25b of the structure 25.

The current source 30 is electrically connected, via an electrical connector 9a such as a wire 9a, to the first end 41a of the mechanical fastener 41 on the first side 25a of the composite structure 25. When the current source 30 is activated an electrical current is provided to the mechanical fastener 41 through the first end 41a of the mechanical fastener 41. The current source 30 may be a battery or generator or a power source deriving power from the output of the wind turbine 100. Preferably the electrical current provided is between 1 V (volt) and 60 V and between greater than 0 mA and less than equal to 20 mA, for example the electrical current may be 24 V, 5 mA.

The current measurement device 50 is electrically connected, via an electrical connector 9b such as a wire 9b, to a second end 41b of the mechanical fastener 41 on the second side 25b of the composite structure 25. The current measurement device 50 may be a simple device that detects presence or absence of the current flow exiting the mechanical fastener 41 through the second end 41b of the mechanical fastener 41. The current measurement device 50 may be an Input/Output Module, commonly referred to as I/O Module, and is well known in the art of wind turbines and thus not explained herein in further details for sake of brevity. The electrical connector 9b may extend to the first side 25a of the composite structure 25 via a small diameter drilled hole for example a hole 99 having a diameter between 1 mm and 3 mm. As a result the current source 30 and the device 50 may be located on the same side of the composite structure 25 for example in the cavity 15 as shown in FIG 3 when the composite structure 25 is the shell 21 of the blade 10.

Thus when the layers 5 are not delaminated and therefore the mechanical fastener 41 is structurally intact, the electrical circuit formed by the current source 30, the mechanical fastener 41 and the device 50 is closed and thereby a current input at the end 41a of the mechanical fastener 41 flows to the end 41b and is detected as present by the device 50. Thus a reading or determination of flow of current in the circuit indicates a state of the composite structure 25 where the layers 5 are not delaminated or not delaminated enough to result into structural failure of the composite structure 25.

When the wind turbine 100 is operated, the mechanical fastener 41 is subjected to repeated cyclic stresses and this may cause snapping or breaking of the mechanical fastener 41 as depicted in FIG 5 which depicts a snapped region 45 in the mechanical fastener 41. The layers 5 are no longer reinforced by the mechanical fastener 41 and thus delaminate as shown in for a region marked by reference numeral 55. As a result of snapping or breaking of the mechanical fastener 41 the electrical circuit formed by the current source 30, the mechanical fastener 41 and the current measurement device 50 breaks resulting into cessation of flow of electric current to the current measurement device 50. Thus absence of electrical current flow in the circuit even when the current source 30 is providing current to the first end 41a of the mechanical fastener 41 is indicative of propagation of delamination in the composite structure 25.

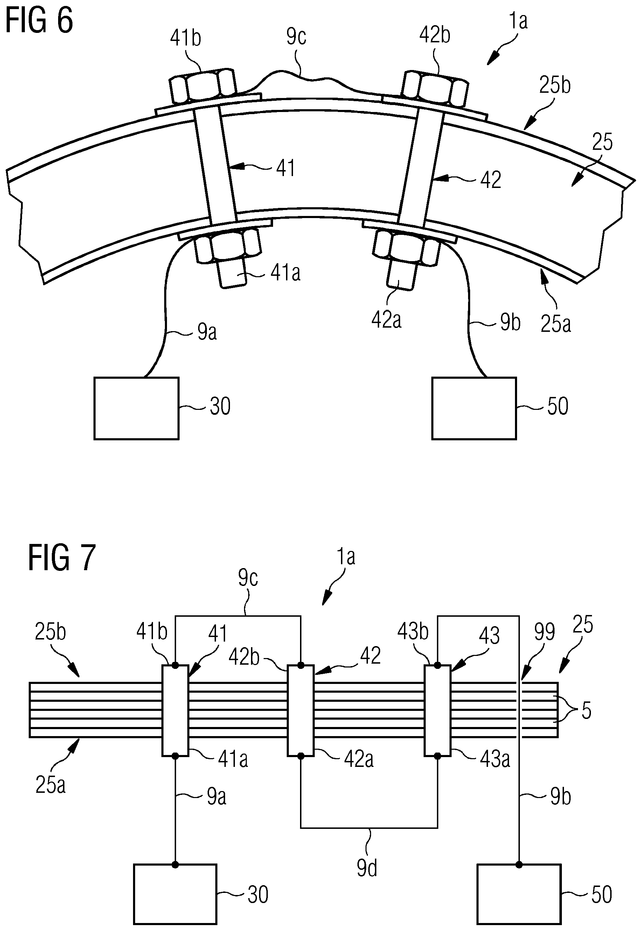

Hereinafter, an arrangement 1a for surveillance of delamination propagation in the composite structure 25 in the wind turbine component has been explained with reference to FIGs 6 to 8.

As shown in FIG 6, in an exemplary embodiment of the arrangement 1a, the arrangement 1a includes a plurality of mechanical fasteners 41, 42, two fasteners in the example of FIG 6. Each fastener 41, 42 is longitudinally positioned through the layers 5 of the composite structure 25 and reinforces the composite structure 25. Each of the mechanical fasteners 41, 42 of FIG 6 is same as the mechanical fastener 41 of FIG 4 and is similarly oriented within the structure 25. The mechanical fasteners 41, 42, are made of electrically conductive material and are electrically connected to each other in series, for example via the electrical connector 9c or the wire 9c connecting the second end 41b of the mechanical fastener 41 to the second end 42b of the mechanical fastener 42. Thus along the direction of flow of current provided by the current source 30 and flowing towards the device 50, the series includes a first mechanical fastener 41 and a last mechanical fastener 42. The current source 30 is electrically connected, for example via the wire 9a, to the first mechanical fastener 41 and provides an electrical current to the first mechanical fastener 41 similar to as explained for FIG 4. The current measurement device 50 is electrically connected, for example via the wire 9b to the last mechanical fastener 42 and determines the electrical current exiting the last mechanical fastener 42 similar to as explained for FIG 4.

Since the mechanical fasteners 41, 42 are electrically connected to each other in series, the electrical current so provided by the current source 30 to the first mechanical fastener 41 flows to the last mechanical fastener 42 and thereon to the device 50. Thus when the layers 5 are not delaminated and therefore both the mechanical fasteners 41, 42 are structurally intact, the electrical circuit formed by the current source 30, the mechanical fasteners 41, 42 and the device 50 is closed and thereby a current input at the end 41a of the mechanical fastener 41 flows to the end 42a of the mechanical fastener 42 and is detected as present by the device 50. Thus a reading or determination of flow of current in the circuit indicates a state of the composite structure 25 where the layers 5 are not delaminated or not delaminated enough to result into structural failure of the composite structure 25.

When the wind turbine 100 is operated, the mechanical fasteners 41, 42 are subjected to repeated cyclic stresses and this may cause snapping or breaking of one or both of the mechanical fasteners 41, 42 in a similar way as is depicted in FIG 5. The layers 5 are no longer reinforced by the one or both of the snapped mechanical fasteners 41, 42 and thus delaminate. As a result of snapping or breaking of the one or both mechanical fasteners 41, 42 the electrical circuit formed by the current source 30, the mechanical fasteners 41, 42 and the device 50 breaks resulting into cessation of flow of electric current to the current measurement device 50. Thus absence of electrical current flow in the circuit even when the current source 30 is providing current to the first end 41a of the mechanical fastener 41 is indicative of propagation of delamination in the composite structure 25.

As shown in FIG 7, in another exemplary embodiment of the arrangement 1a, the arrangement 1a includes three or more mechanical fasteners 41, 42, 43. Each fastener 41, 42, 43 is longitudinally positioned through the layers 5 of the composite structure 25 and reinforces the composite structure 25. Each of the mechanical fasteners 41, 42, 43 of FIG 7 is same as the mechanical fastener 41 of FIG 4 and is similarly oriented within the structure 25. The mechanical fasteners 41, 42, 43 are made of electrically conductive material and are electrically connected to each other in series, for example via the wire 9c connecting the second end 41b of the mechanical fastener 41 to the second end 42b of the mechanical fastener 42 and the wire 9d connecting the first end 42a of the mechanical fastener 42 to the first end 43a of the mechanical fastener 43. Thus along the direction of flow of current provided by the current source 30 and flowing towards the device 50, the series includes a first mechanical fastener 41, an intermediate mechanical fastener 42 and a last mechanical fastener 43. The current source 30 is electrically connected, for example via the wire 9a, to the first mechanical fastener 41 and provides an electrical current to the first mechanical fastener 41 similar to as explained for FIG 6. The current measurement device 50 is electrically connected, for example via the wire 9b passing through the hole 99 to the last mechanical fastener 43 and determines the electrical current exiting the last mechanical fastener 43 similar to as explained for FIG 6.

Since the mechanical fasteners 41, 42, 43 are electrically connected to each other in series, the electrical current so provided by the current source 30 to the first mechanical fastener 41 flows to the last mechanical fastener 43 via the mechanical fastener 42 and thereon to the device 50. Thus when the layers 5 are not delaminated and therefore all the mechanical fasteners 41, 42, 43 are structurally intact, the electrical circuit formed by the current source 30, the mechanical fasteners 41, 42, 43 and the device 50 is closed and thereby a current input at the end 41a of the mechanical fastener 41 flows to the end 43b of the mechanical fastener 43 and is detected as present by the device 50. Thus a reading or determination of flow of current in the circuit indicates a state of the composite structure 25 where the layers 5 are not delaminated or not delaminated enough to result into structural failure of the composite structure 25.

When the wind turbine 100 is operated, the mechanical fasteners 41, 42, 43 are subjected to repeated cyclic stresses and this may cause snapping or breaking of one or more of the mechanical fasteners 41, 42, 43 in a similar way as is depicted in FIG 5. The layers 5 are no longer reinforced by the one or more of the snapped mechanical fasteners 41, 42, 43 and thus delaminate. As a result of snapping or breaking of the one or more mechanical fasteners 41, 42, 43 the electrical circuit formed by the current source 30, the mechanical fasteners 41, 42, 43 and the device 50 breaks resulting into cessation of flow of electric current to the current measurement device 50. Thus absence of electrical current flow in the circuit even when the current source 30 is providing current to the first end 41a of the mechanical fastener 41 is indicative of propagation of delamination in the composite structure 25.

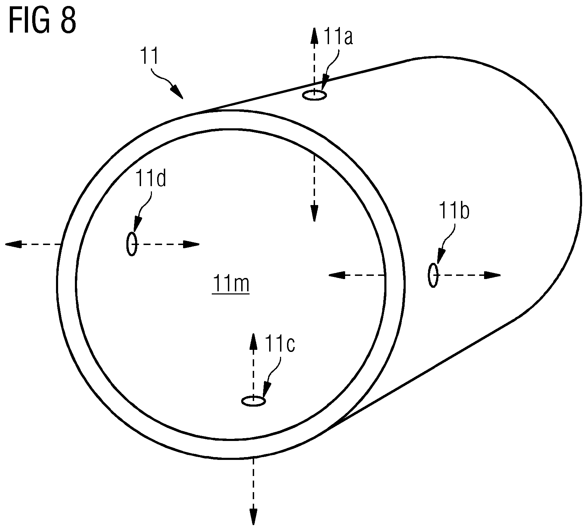

FIG 8 provides a scheme of orientation and placement of the mechanical fasteners 41, 42, 43 in the root section 11 of the blade 10. The mechanical fasteners 41, 42, 43 are positioned around the circumference of the root 11. In the example of FIG 8, four locations 11a, 11b, 11c and 11d where the mechanical fasteners 41, 42, 43 are positioned around the root 11 are equidistantly separated from each other. The arrows at each of the locations 11a, 11b, 11c and 11d schematically depict orientations of the mechanical fasteners 41, 42, 43 with respect to the each other. The current source 30 (not shown in FIG 8) may be positioned inside the cavity 11m of the root section 11. The current may flow from inside of the cavity 11m to the outside of the root 11 via a first mechanical fastener (not shown in FIG 8) at the location 11a then through a wire (not shown in FIG 8) to a second mechanical fastener (not shown in FIG 8) at the location 11b. At the location 11b the current flows from the outside of the root 11 to the inside of the cavity 11m via the second mechanical fastener, then through a wire (not shown in FIG 8) to a third mechanical fastener (not shown in FIG 8) at the location 11c, and so on and so forth until the current finally flows via the fourth mechanical fastener (not shown) at the location 11d to the inside of the cavity 11m and into the device 50 (not shown in FIG 8) that may be positioned in the cavity 11m. The number of mechanical fasteners may be greater or lesser than 4. By such arrangement 1a at the root section 11, surveillance of delamination propagation in the root section 11 is performed.

In a third aspect of the present technique a method for surveillance of delamination propagation in the composite structure in the wind turbine component is presented. In the method, the arrangement 1 as explained in FIG 4 or the arrangement 1a as explained for FIGs 6 to 8 is provided. Thereafter, the current source 50 of the arrangement 1, 1a is activated to provide flow of electrical current in the arrangement 1, 1a so provided. Finally in the method, the electrical current measured by the current measurement device 50 of the arrangement 1, 1a is determined.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope of this invention. The scope of the invention is, therefore, indicated by the following claims rather than by the foregoing description. All changes, modifications, and variations coming within the meaning of the claims are to be considered within their scope.

### List of Reference Characters

- 1: arrangement according the first aspect
- 1a: arrangement according the second aspect
- 5: layers of the composite structure
- 9a-d: electrical connectors
- 10: rotor blade
- 11: root section
- 11a-d: locations in the root section
- 11m: cavity in root section
- 12: tip section
- 12a: tip
- 13: trailing edge section
- 13a: trailing edge
- 14: leading edge section
- 14a: leading edge
- 15: cavity
- 16: span
- 17: chord line
- 18: shoulder
- 19: transition section
- 20: airfoil section
- 21: shell
- 21a: part of the shell
- 21b: part of the shell
- 22: web
- 24a: spar cap
- 24b: spar cap
- 25: composite structure
- 25a: first side of the composite structure
- 25b: second side of the composite structure
- 30: current source
- 41: first mechanical fastener
- 41a: first side of the first mechanical fastener
- 41b: second side of the first mechanical fastener
- 42: second mechanical fastener
- 42a: first side of the second mechanical fastener
- 42b: second side of the second mechanical fastener
- 43: third mechanical fastener
- 43a: first side of the third mechanical fastener
- 43b: second side of the third mechanical fastener
- 50: current measurement device
- 100: wind turbine
- 110: rotor
- 110a: rotational axis
- 112: hub
- 116: blade adjustment mechanism
- 120: tower
- 121: yaw angle adjustment mechanism
- 122: nacelle
- 124: gear box
- 125: main shaft
- 126: brake
- 128: generator
- 142: angle sensor
- 143: rotational speed sensor
- 144: power sensor
- 150: control system
- 210: conventionally known rotor blade

## Claims

1. An arrangement (1) for surveillance of delamination propagation in a composite structure (25) in a wind turbine component, the arrangement (1) comprising:
- at least one mechanical fastener (41) longitudinally positioned through layers (5) of the composite structure (25) to reinforce the composite structure (25), wherein the mechanical fastener (41) is made of an electrically conductive material;
**characterized in that** it further comprises:
- a current source (30) electrically connected to a first end (41a) of the mechanical fastener (41) and configured to provide an electrical current to the mechanical fastener (41) through the first end (41a) of the mechanical fastener (41); and
- a current measurement device (50) electrically connected to a second end (41b) of the mechanical fastener (41) and configured to determine the electrical current exiting the mechanical fastener (41) through the second end (41b) of the mechanical fastener (41).

2. The arrangement (1) according to claim 1, wherein the mechanical fastener (41) is a bolt.

3. The arrangement (1) according to claim 1 or 2, wherein the electrically conductive material is stainless steel.

4. The arrangement (1) according to any of claims 1 to 3, wherein the composite structure (25) through which the mechanical fastener (41) is longitudinally positioned is a shell (21) of the wind turbine blade (10).

5. The arrangement (1) according to claim 4, wherein the composite structure (25) through which the mechanical fastener (41) is longitudinally positioned is a root section (11) of the wind turbine blade (10).

6. The arrangement (1) according to any of claims 1 to 3, wherein the composite structure (25) through which the mechanical fastener (41) is longitudinally positioned is a web (22) of the wind turbine blade (10).

7. The arrangement (1) according to any of claims 1 to 3, wherein the composite structure (25) through which the mechanical fastener (41) is longitudinally positioned is a spar cap (24a, 24b) of the wind turbine blade (10).

8. The arrangement (1a) according to claim 1, the arrangement (1a) comprising:
- at least one further mechanical fastener (41, 42, 43) longitudinally positioned through layers (5) of the composite structure (25) to reinforce the composite structure (25), wherein the at least one further mechanical fastener (41, 42, 43)is made of an electrically conductive material and is electrically connected to the at least one mechanical fastener in series, and wherein the series comprises a first mechanical fastener (41) and a last mechanical fastener (42, 43) ;
- wherein the current source (30) is electrically connected to the first mechanical fastener (41) and configured to provide an electrical current to the first mechanical fastener (41); and
- wherein the current measurement device (50) is electrically connected to the last mechanical fastener (42, 43) and configured to determine the electrical current exiting the last mechanical fastener (42, 43).

9. The arrangement (1a) according to claim 8, wherein at least one of the mechanical fasteners (41, 42, 43) is a bolt.

10. The arrangement (1a) according to claim 8 or 9, wherein the electrically conductive material is stainless steel.

11. The arrangement (1a) according to any of claims 8 to 10, wherein the composite structure (25) through which the mechanical fasteners (41, 42, 43) are longitudinally positioned is a shell (21) of the wind turbine blade (10).

12. The arrangement (1a) according to claim 11, wherein the composite structure (25) through which the mechanical fasteners (41, 42, 43) are longitudinally positioned is a root section (11) of the wind turbine blade (10).

13. The arrangement (1a) according to any of claims 8 to 10, wherein the composite structure (25) through which the mechanical fasteners (41, 42, 43) are longitudinally positioned is a web (22) of the wind turbine blade (10).

14. The arrangement (1a) according to any of claims 8 to 10, wherein the composite structure (25) through which the mechanical fasteners (41, 42, 43) are longitudinally positioned is a spar cap (24a, 24b) of the wind turbine blade (10) .

15. A method for surveillance of delamination propagation in a composite structure (25) in a wind turbine component, the method comprising:
- providing an arrangement (1, 1a) according to any of claims 1 to 14;
- activating the current source (30) of the arrangement (1, 1a) to provide flow of electrical current in the arrangement (1, 1a);
- determining the electrical current measured by the current measurement device (50) of the arrangement (1, 1a).

## Patentansprüche

1. Anordnung (1) zur Überwachung des Delaminationsfortschritts in einer Verbundstoffstruktur (25) in einer Windturbinenkomponente, wobei die Anordnung (1) umfasst:
- mindestens ein mechanisches Befestigungselement (41), das in Längsrichtung durch die Schichten (5) der Verbundstoffstruktur (25) positioniert ist, um die Verbundstoffstruktur (25) zu verstärken, wobei das mechanische Befestigungselement (41) aus einem elektrisch leitfähigen Material besteht;
**dadurch gekennzeichnet, dass** es ferner umfasst:
- eine Stromquelle (30), die mit einem ersten Ende (41a) des mechanischen Befestigungselements (41) elektrisch verbunden und so konfiguriert ist, dass sie dem mechanischen Befestigungselement (41) über das erste Ende (41a) des mechanischen Befestigungselements (41) einen elektrischen Strom zuführt; und
- eine Strommessvorrichtung (50), die elektrisch mit einem zweiten Ende (41b) des mechanischen Befestigungselements (41) verbunden und so konfiguriert ist, dass sie den elektrischen Strom bestimmt, der das mechanische Befestigungselement (41) durch das zweite Ende (41b) des mechanischen
Befestigungselements (41) verlässt.

2. Anordnung (1) nach Anspruch 1, wobei das mechanische Befestigungsmittel (41) ein Bolzen ist.

3. Anordnung (1) nach Anspruch 1 oder 2, wobei das elektrisch leitfähige Material Edelstahl ist.

4. Anordnung (1) nach einem der Ansprüche 1 bis 3, wobei die Verbundstoffstruktur (25), durch die das mechanische Befestigungselement (41) in Längsrichtung positioniert ist, eine Schale (21) des Windturbinenblatts (10) ist.

5. Anordnung (1) nach Anspruch 4, wobei die Verbundstoffstruktur (25), durch die das mechanische Befestigungselement (41) in Längsrichtung positioniert ist, ein Fußabschnitt (11) der Windturbinenblatts (10) ist.

6. Anordnung (1) nach einem der Ansprüche 1 bis 3, wobei die Verbundstoffstruktur (25), durch die das mechanische Befestigungselement (41) in Längsrichtung positioniert ist, ein Steg (22) des Windturbinenblatts (10) ist.

7. Anordnung (1) nach einem der Ansprüche 1 bis 3, wobei die Verbundstoffstruktur (25), durch die das mechanische Befestigungselement (41) in Längsrichtung positioniert ist, ein Blattgurt (24a, 24b) des Windturbinenblatts (10) ist.

8. Anordnung (1a) nach Anspruch 1, wobei die Anordnung (1a) umfasst:
- mindestens ein weiteres mechanisches Befestigungselement (41, 42, 43), das in Längsrichtung durch Schichten (5) der Verbundstoffstruktur (25) hindurch positioniert ist, um die Verbundstoffstruktur (25) zu verstärken, wobei das mindestens eine weitere mechanische Befestigungselement (41, 42, 43) aus einem elektrisch leitfähigen Material besteht und mit dem mindestens einen mechanischen Befestigungselement in Reihe elektrisch verbunden ist, und wobei die Reihe ein erstes mechanisches Befestigungselement (41) und ein letztes mechanisches Befestigungselement (42, 43) umfasst;
- wobei die Stromquelle (30) elektrisch mit dem ersten mechanischen Befestigungselement (41) verbunden ist und so konfiguriert ist, dass sie dem ersten mechanischen Befestigungselement (41) einen elektrischen Strom zuführt; und
- wobei die Strommessvorrichtung (50) elektrisch mit dem letzten mechanischen Befestigungselement (42, 43) verbunden und so konfiguriert ist, dass sie den aus dem letzten mechanischen Befestigungselement (42, 43) austretenden elektrischen Strom bestimmt.

9. Anordnung (1a) nach Anspruch 8, wobei mindestens eines der mechanischen Verbindungselemente (41, 42, 43) ein Bolzen ist.

10. Anordnung (1a) nach Anspruch 8 oder 9, wobei das elektrisch leitfähige Material Edelstahl ist.

11. Anordnung (1a) nach einem der Ansprüche 8 bis 10, wobei die Verbundstoffstruktur (25), durch die die mechanischen Befestigungselemente (41, 42, 43) in Längsrichtung positioniert sind, eine Schale (21) des Windturbinenblatts (10) ist.

12. Anordnung (1a) nach Anspruch 11, wobei die Verbundstoffstruktur (25), durch die die mechanischen Befestigungselemente (41, 42, 43) in Längsrichtung positioniert sind, ein Fußabschnitt (11) der Windturbinenblatts (10) ist.

13. Anordnung (1a) nach einem der Ansprüche 8 bis 10, wobei die Verbundstoffstruktur (25), durch die die mechanischen Befestigungselemente (41, 42, 43) in Längsrichtung positioniert sind, ein Steg (22) des Windturbinenblatts (10) ist.

14. Anordnung (1a) nach einem der Ansprüche 8 bis 10, wobei die Verbundstoffstruktur (25), durch die die mechanischen Befestigungselemente (41, 42, 43) in Längsrichtung positioniert sind, ein Blattgurt (24a, 24b) des Windturbinenblatts (10) ist.

15. Verfahren zur Überwachung des Delaminationsfortschritts in einer Verbundstoffstruktur (25) in einer Windturbinenkomponente, wobei das Verfahren umfasst:
- Bereitstellen einer Anordnung (1, 1a) nach einem der Ansprüche 1 bis 14;
- Aktivieren der Stromquelle (30) der Anordnung (1, 1a), um einen elektrischen Stromfluss in der Anordnung (1, 1a) zu erzeugen;
- Bestimmen des von der Strommesseinrichtung (50) der Anordnung (1, 1a) gemessenen elektrischen Stroms.

## Revendications

1. Agencement (1) pour la surveillance de la propagation de délaminage dans une structure composite (25) dans un composant d'éolienne, l'agencement (1) comprenant :
- au moins une attache mécanique (41) positionnée longitudinalement à travers des couches (5) de la structure composite (25) pour renforcer la structure composite (25), dans lequel l'attache mécanique (41) est réalisée en un matériau électriquement conducteur ;
**caractérisé en ce qu'**il comprend en outre :
- une source de courant (30) connectée électriquement à une première extrémité (41a) de l'attache mécanique (41) et configurée pour fournir un courant électrique à l'attache mécanique (41) à travers la première extrémité (41a) de l'attache mécanique (41) ; et
- un dispositif de mesure de courant (50) connecté électriquement à une deuxième extrémité (41b) de l'attache mécanique (41) et configuré pour déterminer le courant électrique sortant de l'attache mécanique (41) à travers la deuxième extrémité (41b) de l'attache mécanique (41).

2. Agencement (1) selon la revendication 1, dans lequel l'attache mécanique (41) est un boulon.

3. Agencement (1) selon la revendication 1 ou 2, dans lequel le matériau électriquement conducteur est de l'acier inoxydable.

4. Agencement (1) selon l'une des revendications 1 à 3, dans lequel la structure composite (25) à travers laquelle l'attache mécanique (41) est positionnée longitudinalement est une coque (21) de la pale d'éolienne (10).

5. Agencement (1) selon la revendication 4, dans lequel la structure composite (25) à travers laquelle l'attache mécanique (41) est positionnée longitudinalement est une section de racine (11) de la pale d'éolienne (10).

6. Agencement (1) selon l'une des revendications 1 à 3, dans lequel la structure composite (25) à travers laquelle l'attache mécanique (41) est positionnée longitudinalement est une âme (22) de la pale d'éolienne (10).

7. Agencement (1) selon l'une des revendications 1 à 3, dans lequel la structure composite (25) à travers laquelle l'attache mécanique (41) est positionnée longitudinalement est une semelle de longeron (24a, 24b) de la pale d'éolienne (10).

8. Agencement (1a) selon la revendication 1, l'agencement (1a) comprenant :
- au moins une attache mécanique supplémentaire (41, 42, 43) positionnée longitudinalement à travers des couches (5) de la structure composite (25) pour renforcer la structure composite (25), dans lequel l'au moins une attache mécanique supplémentaire (41, 42, 43) est réalisée en un matériau électriquement conducteur et est électriquement connectée à l'au moins une attache mécanique en série, et dans lequel la série comprend une première attache mécanique (41) et une dernière attache mécanique (42, 43) ;
- dans lequel la source de courant (30) est électriquement connectée à la première attache mécanique (41) et configurée pour fournir un courant électrique à la première attache mécanique (41) ; et
- dans lequel le dispositif de mesure de courant (50) est électriquement connecté à la dernière attache mécanique (42, 43) et configuré pour déterminer le courant électrique sortant de la dernière attache mécanique (42, 43).

9. Agencement (1a) selon la revendication 8, dans lequel au moins une des attaches mécaniques (41, 42, 43) est un boulon.

10. Agencement (1a) selon la revendication 8 ou 9, dans lequel le matériau électriquement conducteur est de l'acier inoxydable.

11. Agencement (1a) selon l'une des revendications 8 à 10, dans lequel la structure composite (25) à travers laquelle les attaches mécaniques (41, 42, 43) sont positionnées longitudinalement est une coque (21) de la pale d'éolienne (10).

12. Agencement (1a) selon la revendication 11, dans lequel la structure composite (25) à travers laquelle les attaches mécaniques (41, 42, 43) sont positionnées longitudinalement est une section de racine (11) de la pale d'éolienne (10).

13. Agencement (1a) selon l'une des revendications 8 à 10, dans lequel la structure composite (25) à travers laquelle les attaches mécaniques (41, 42, 43) sont positionnées longitudinalement est une âme (22) de la pale d'éolienne (10).

14. Agencement (1a) selon l'une des revendications 8 à 10, dans lequel la structure composite (25) à travers laquelle les attaches mécaniques (41, 42, 43) sont positionnées longitudinalement est une semelle de longeron (24a, 24b) de la pale d'éolienne (10).

15. Procédé de surveillance de la propagation de délaminage dans une structure composite (25) dans un composant d'éolienne, le procédé comprenant :
- fournir un agencement (1, 1a) selon l'une des revendications 1 à 14 ;
- activer la source de courant (30) de l'agencement (1, 1a) pour fournir un flux de courant électrique dans l'agencement (1, 1a) ;
- déterminer le courant électrique mesuré par le dispositif de mesure de courant (50) de l'agencement (1, 1a).
